# EUROPÄISCHE PATENTANMELDUNG

(11) **EP 4 488 906 A1**
(43) Veröffentlichungstag der Anmeldung: **08.01.2025**
(21) Anmeldenummer: 24185936.2
(22) Anmeldetag: 02.07.2024
(51) Int. Cl.: G06Q 10/087

(54) **VORRICHTUNG, VERFAHREN UND SYSTEM ZUM WARENMANAGEMENT**

(30) Priorität: 07.07.2023 DE 102023117999
(71) Anmelder: STILL GmbH, 22113 Hamburg (DE)
(72) Erfinder: RUDALL, Yan, 25337 Elmshorn (DE); KOENIG, Ralf, 21365 Adendorf (DE); ABEL, Bengt, 21335 Lüneburg (DE); BAKR, Mohamed, 21073 Hamburg (DE); SCHÜTHE, Dennis, 21244 Buchholz (DE)
(74) Vertreter: Patentship Patentanwaltgesellschaft

(57) **Zusammenfassung**

Die Erfindung betrifft eine Vorrichtung (110) zum automatisierten Verwalten einer Vielzahl von Ladungsträgern (140) und einer Vielzahl von Wareneinheiten (160a,b), insbesondere in einem Warenlager, wobei auf einem oder mehreren der Vielzahl von Ladungsträgern (140) eine oder mehrere der Vielzahl von Wareneinheiten (160a,b) angeordnet sind. Die Vorrichtung (110) umfasst eine Kommunikationsschnittstelle (113), welche ausgebildet ist, eine Vielzahl von Sensordaten von einer Vielzahl Sensoren (130a,b) zu empfangen, wobei die Vielzahl von Sensordaten Informationen über wenigstens einen Ladungsträger (160) der Vielzahl von Ladungsträgern (160) und/oder Informationen über die eine oder mehreren auf dem Ladungsträger (160) angeordneten Wareneinheiten (160a,b) enthalten. Ferner umfasst die Vorrichtung (110) eine Prozessoreinrichtung (111), welche ausgebildet ist, auf der Grundlage der Vielzahl von Sensordaten einen Beladungsstatus des Ladungsträgers (160) zu bestimmen. Ferner betrifft die Erfindung ein entsprechendes Verfahren zum automatisierten Verwalten einer Vielzahl von Ladungsträgern (140) und einer Vielzahl von Wareneinheiten (160a,b).

## Beschreibung

Die Erfindung betrifft eine Vorrichtung, ein Verfahren und ein System zum automatisierten Warenmanagement in einem Warenlager, insbesondere zum Bestimmen eines jeweiligen Beladungszustands einer Vielzahl von Ladungsträgern mit Ladungen bzw. Wareneinheiten in dem Warenlager.

Für den Transport und die Lagerung von Produkten, Waren und Materialien in einem Warenlager werden oftmals Ladungsträger, insbesondere Paletten verwendet. Derartige Paletten, insbesondere Euro-Paletten sind dazu ausgebildet, dass auf einer jeweiligen Palette eine Vielzahl von Einzelladungen bzw. Wareneinheiten beispielsweise in Form von Kartonschachteln angeordnet werden können. Zur Handhabung derartiger Ladungsträger, z.B. in der Intralogistik, d.h. dem innerbetrieblichen Materialfluss, z.B. in einem Warenlager, werden Flurförderzeuge, z.B. Gabelstapler, Transportroboter und dergleichen eingesetzt, welche zumindest teilweise automatisiert sein können. Ein Warenlager ist in der Regel ein dynamisches Umfeld, in dem es eine Herausforderung darstellt, automatisiert den Bestand an Waren zu verwalten und auf dieser Grundlage die Flurförderzeuge zum Transport der Waren bzw. Ladungsträger zu steuern.

Vor diesem Hintergrund liegt der vorliegenden Erfindung die Aufgabe zugrunde, eine Datenverarbeitungsvorrichtung, ein Verfahren und ein System zum automatisierten Warenmanagement in einem Warenlager, insbesondere zum Bestimmen eines jeweiligen Beladungszustands einer Vielzahl von Ladungsträgern mit Ladungen bzw. Wareneinheiten in dem Warenlager bereitzustellen.

Gemäß einem ersten Aspekt der Erfindung wird eine Datenverarbeitungsvorrichtung zum automatisierten Verwalten von Ladungsträgern und Wareneinheiten (hierin auch als Einzelladungen oder kurz Ladungen bezeichnet) in einem Warenlager bereitgestellt, wobei auf einem oder mehreren der Vielzahl von Ladungsträgern eine oder mehrere der Vielzahl von Wareneinheiten angeordnet sind. Bei dem Ladungsträger kann es sich um eine Palette, insbesondere eine Euro-Palette handeln.

Die Datenverarbeitungsvorrichtung umfasst eine Kommunikationsschnittstelle, welche ausgebildet ist, eine Vielzahl von Sensordaten von einer Vielzahl Sensoren in dem Warenlager zu empfangen, wobei die Vielzahl von Sensordaten Informationen über wenigstens einen Ladungsträger und/oder Informationen über die eine oder mehreren auf dem Ladungsträger angeordneten Wareneinheiten enthalten.

Die Datenverarbeitungsvorrichtung umfasst ferner einen Prozessoreinrichtung, welche ausgebildet ist, auf der Grundlage der Vielzahl von Sensordaten einen Beladungsstatus des Ladungsträgers mit Wareneinheiten zu bestimmen. Somit erlaubt es die Datenverarbeitungsvorrichtung gemäß dem ersten Aspekt der Erfindung, vorteilhaft den Füllstand einer Vielzahl von Ladungsträgern, insbesondere Paletten in einem Warenlager zu bestimmen. Diese Informationen über den Füllstand der Vielzahl von Ladungsträgern können, wie nachstehend im Detail beschrieben, vorteilhaft zum Verwalten der Vielzahl von Ladungsträgern mit den darauf angeordneten Wareneinheiten sowie zum Verwalten einer Vielzahl von Flurförderzeugen und/oder Transportrobotern zum Transport der Ladungsträger verwendet werden.

Gemäß einer Ausführungsform umfassen die Vielzahl von Sensordaten eine Vielzahl von Bilddaten, welche zumindest einen Abschnitt des Ladungsträgers und/oder zumindest einen Abschnitt der einen oder mehreren auf dem Ladungsträger angeordneten Wareneinheiten repräsentieren. Die Vielzahl von Bilddaten können von den als Kameras ausgebildeten Sensoren erfasst werden.

In einer Ausführungsform können die Vielzahl von Sensordaten unterschiedliche Sensordatentypen umfassen, wie beispielsweise Bilddaten und/oder Radar- und/oder Lidar-Daten, und die Prozessoreinrichtung der Datenverarbeitungsvorrichtung kann ausgebildet sein, die unterschiedlichen Sensordatentypen zu fusionieren, um auf der Grundlage der Vielzahl von fusionierten Sensordaten den Beladungsstatus eines jeweiligen Ladungsträgers mit Wareneinheiten zu bestimmen. Zusätzlich oder alternativ können die Vielzahl von Sensordaten zu unterschiedlichen Zeitpunkten und/oder aus unterschiedlichen Positionen bzw. Orientierungen relativ zu dem Ladungsträger und den darauf angeordneten Wareneinheiten von den Sensoren erfasst werden. Falls die Vielzahl von Sensordaten zeitlich oder räumlich versetzte Information und/oder nur Informationen über einzelne Abschnitte des Ladungsträgers und den darauf angeordneten Wareneinheiten enthalten, kann die Prozessoreinrichtung ausgebildet sein, diese Sensordaten zu fusionieren, beispielsweise mittels bekannter Homographie-Verfahren.

Gemäß einer Ausführungsform ist die Prozessoreinrichtung der Datenverarbeitungsvorrichtung ausgebildet, ein Machine-Learning-Modell, ML-Modell, insbesondere ein künstliches neuronales Netz zur Objekterkennung zu implementieren, wobei das ML-Modell ausgebildet ist, auf der Grundlage der Vielzahl von Sensordaten einen jeweiligen Ladungsträger und die darauf angeordnete eine oder mehreren Wareneinheiten zunächst zu erkennen und dann auf der Grundlage des erkannten Ladungsträgers und der erkannten Wareneinheiten den Beladungsstatus des Ladungsträgers zu bestimmen.

In einer Ausführungsform ist die Prozessoreinrichtung der Datenverarbeitungsvorrichtung ausgebildet, auf der Grundlage der Vielzahl von Sensordaten eine Anzahl der auf dem Ladungsträger angeordneten einen oder mehreren Wareneinheiten zu bestimmen, um den Beladungsstatus eines jeweiligen Ladungsträgers mit Wareneinheiten zu bestimmen.

Gemäß einer Ausführungsform ist die Prozessoreinrichtung der Datenverarbeitungsvorrichtung ausgebildet, auf der Grundlage der Vielzahl von Sensordaten Eigenschaften der auf dem Ladungsträger angeordneten einen oder mehreren Wareneinheiten zu bestimmen. Insbesondere kann die Prozessoreinrichtung der Datenverarbeitungsvorrichtung dazu ausgebildet sein, auf der Grundlage der Vielzahl von Sensordaten die Abmessungen bzw. Dimensionen der auf dem Ladungsträger angeordneten Wareneinheiten zu bestimmen.

In einer Ausführungsform ist die Kommunikationsschnittelle ausgebildet, Informationen über den Beladungsstatus des Ladungsträgers an ein Warenverwaltungssystem zu übermitteln.

Gemäß einem zweiten Aspekt der Erfindung wird ein Warenverwaltungssystem zum automatisierten Verwalten einer Vielzahl von Ladungsträgern mit darauf angeordneten Wareneinheiten in einem Warenlager bereitgestellt. Das Warenverwaltungssystem umfasst eine Vielzahl von Flurförderzeugen und/oder Transportrobotern zum Transport der Ladungsträger und/oder der Wareneinheiten und eine Datenverarbeitungsvorrichtung gemäß dem ersten Aspekt der Erfindung.

In einer Ausführungsform ist die Prozessoreinrichtung der Datenverarbeitungsvorrichtung ferner ausgebildet, auf der Grundlage des Beladungsstatus des Ladungsträgers mit Wareneinheiten eine Vielzahl von Steuersignalen zum Steuern der Vielzahl von Flurförderzeugen und/oder Transportrobotern zu generieren, und wobei die Kommunikationsschnittstelle ausgebildet ist, die Vielzahl von Steuersignalen an die Vielzahl von Flurförderzeugen und/oder Transportrobotern zu übermitteln.

Gemäß einem dritten Aspekt der Erfindung wird ein computer-implementiertes Verfahren zum automatisierten Verwalten einer Vielzahl von Ladungsträgern und einer Vielzahl von Wareneinheiten in einem Warenlager bereitgestellt, wobei auf einem oder mehreren der Vielzahl von Ladungsträgern eine oder mehrere der Vielzahl von Wareneinheiten angeordnet sind. Bei dem Ladungsträger kann es sich um eine Palette, insbesondere eine Euro-Palette handeln. Das Verfahren umfasst die folgenden Schritte:
Empfangen einer Vielzahl von Sensordaten von einer Vielzahl von Sensoren in dem Warenlager, wobei die Vielzahl von Sensordaten Informationen über wenigstens einen Ladungsträger und/oder Informationen über die eine oder mehreren auf dem Ladungsträger angeordneten Wareneinheiten enthalten; und
Bestimmen eines Beladungsstatus des Ladungsträgers mit Wareneinheiten auf der Grundlage der Vielzahl von Sensordaten.

Weitere Vorteile und Einzelheiten der Erfindung werden beispielhaft anhand der in den schematischen Figuren dargestellten Ausführungsbeispielen näher erläutert. Hierbei zeigt:
Figur 1 eine schematische Darstellung eines erfindungsgemäßen Systems mit einer Datenverarbeitungsvorrichtung zum automatisierten Warenmanagement in einem Warenlager, insbesondere zum Bestimmen eines jeweiligen Beladungsstatus einer Vielzahl von Ladungsträgern mit Wareneinheiten in dem Warenlager; und
Figur 2 ein Flussdiagramm mit Schritten eines Verfahrens zum automatisierten Warenmanagement in einem Warenlager, insbesondere zum Bestimmen eines jeweiligen Beladungszustands einer Vielzahl von Ladungsträgern mit Wareneinheiten in dem Warenlager.

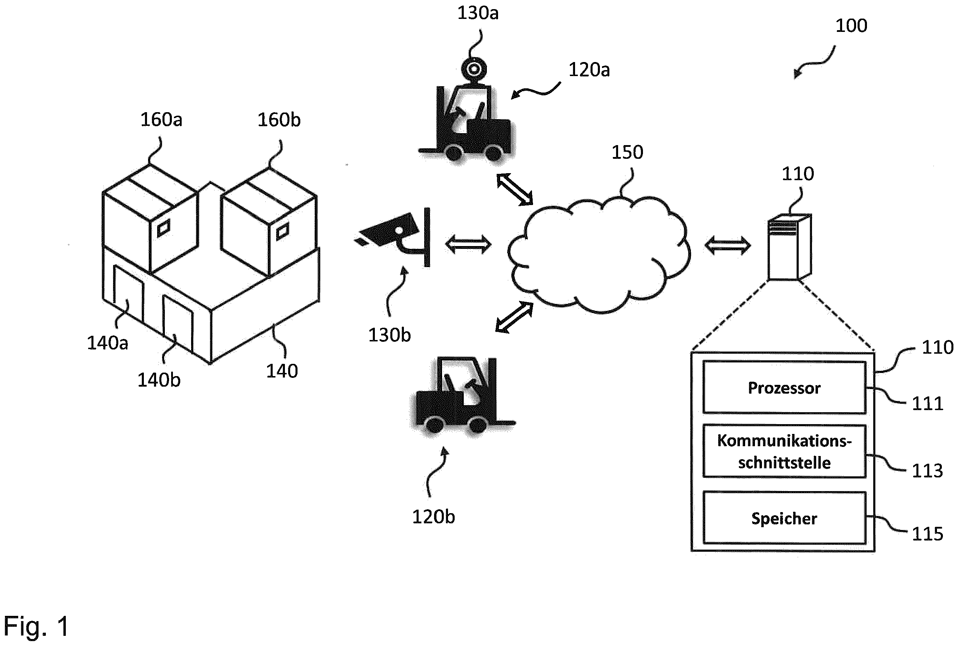

Figur 1 zeigt eine schematische Darstellung eines erfindungsgemäßen Systems 100 mit einer erfindungsgemäßen Datenverarbeitungsvorrichtung 110 zum automatisierten Warenmanagement in einem industriellen Umfeld, insbesondere einem Warenlager oder einer Fabrikhalle. In diesem industriellen Umfeld werden für den Transport und die Lagerung von Produkten, Waren und Materialien 160a,b (hierin als Wareneinheiten 160a,b bezeichnet) eine Vielzahl von Ladungsträgern 140, beispielsweise in Form von Paletten, insbesondere Europaletten verwendet. Zur Handhabung derartiger Ladungsträger 140, z.B. in der Intralogistik, d.h. dem innerbetrieblichen Materialfluss werden Flurförderzeuge 120a,b, z.B. Gabelstapler und/oder Transportroboter in Form eines Pickers und dergleichen eingesetzt, welche zumindest teilweise automatisiert sein können und eine Lastaufnahmeeinrichtung, insbesondere zwei Lastgabeln zum Aufnehmen eines Ladungsträgers 140 aufweisen.

Figur 1 zeigt einen Ladungsträger 140 in Form einer Palette 140, insbesondere einer Euro-Palette 140, auf der beispielhaft zwei Wareneinheiten bzw. Ladungen 160a,b in Form von Kartonschachteln 160a,b angeordnet sind. Bekanntermaßen umfasst der Ladungsträger 140 in Form einer Palette 140 Einschuböffnungen bzw. Taschen 140a,b, welche ausgebildet sind, die entsprechend geformten Lastgabeln eines Flurförderzeugs 120a,b aufzunehmen, damit der Ladungsträger 140 in Form einer Palette 140 zusammen mit den darauf angeordneten Wareneinheiten 160a,b von dem Flurförderzeug 120a,b aufgenommen und transportiert werden kann.

Wie dies nachstehend im Detail beschrieben wird, ist die erfindungsgemäße Datenverarbeitungsvorrichtung 110 ausgebildet, einen Beladungsstatus, d.h. eine Art "Füllstand" eines jeweiligen Ladungsträgers 140 mit Wareneinheiten 160a,b in dem Warenlager zu bestimmen. Bei der in Figur 1 dargestellten Datenverarbeitungsvorrichtung 110 kann es sich beispielsweise um einen Industrie-PC 110 oder einen Cloud-Server, insbesondere einen Edge-Cloud-Server 110 handeln. In einer weiteren Ausführungsform kann die Datenverarbeitungsvorrichtung 110 als Teil eines der mobilen Flurförderzeuge 120a und/oder Transportroboter ausgebildet sein.

Wie in der Figur 1 dargestellt, umfasst die Datenverarbeitungsvorrichtung 110 eine Prozessoreinrichtung 111, eine Kommunikationsschnittstelle 113 und einen, insbesondere nichtflüchtigen, Speicher 115. Der Speicher 115 kann ausgebildet sein, Daten und ausführbaren Programmcode zu speichern, der, wenn von der Prozessoreinrichtung 111 der Datenverarbeitungsvorrichtung 110 ausgeführt, die Prozessoreinrichtung 111 veranlasst, die im Folgenden beschriebenen Funktionen, Operationen und Verfahren durchzuführen.

Wie in Figur 1 dargestellt, umfasst das System 100 ferner eine Vielzahl von Sensoren 130a,b, welche ausgebildet sind, eine Vielzahl von Sensordaten in dem Warenlager zu erfassen, welche Informationen über die Vielzahl von Ladungsträger 140 mit den darauf angeordneten Wareneinheiten 160a,b enthalten, und die Sensordaten an die Datenverarbeitungsvorrichtung 110 zu übertragen. Die Vielzahl von Sensoren 130a,b können eine Vielzahl von bildgebenden Sensoren, insbesondere Kameras 130a,b umfassen, die in dem industriellen Umfeld, insbesondere dem Warenlager stationär und/oder an der Vielzahl von mobilen Flurförderzeugen 120a und/oder Transportrobotern angebracht sind und/oder an Flug-Drohnen als Sensorträger angebracht sind und/oder von einer Person getragen oder auf einen Rollwagen geschoben werden. Alternativ oder zusätzlich können die Vielzahl von Sensoren 130a,b z.B. an den Flurförderzeugen 120a,b montierten Radar- und/oder Lidar-Sensoren 130a,b umfassen.

In einer Ausführungsform ist die Kommunikationsschnittstelle 113 der Datenverarbeitungsvorrichtung 110 ausgebildet, drahtlos und/oder drahtgebunden die Vielzahl von Sensordaten von den Sensoren 130a,b zu empfangen und/oder mit den mobilen Flurförderzeugen 120a,b und/oder Transportrobotern und/oder Flug-Drohnen zu kommunizieren. Beispielsweise kann die Kommunikationsschnittstelle 113 der Datenverarbeitungsvorrichtung 110 ausgebildet sein, über ein Kommunikationsnetzwerk, z.B. ein WLAN, 5G-Netzwerk und/oder das Internet 150 die Vielzahl von Sensordaten von den Sensoren 130a,b zu empfangen und/oder mit den mobilen Flurförderzeugen 120a,b und/oder Transportrobotern und/oder Flugdrohnen zu kommunizieren.

Wie bereits vorstehend erwähnt, ist die erfindungsgemäße Datenverarbeitungsvorrichtung 110 ausgebildet, einen Beladungsstatus, d.h. eine Art "Füllstand" eines jeweiligen Ladungsträgers 140 mit Wareneinheiten 160a,b in dem Warenlager zu bestimmen. Hierzu ist die Kommunikationsschnittstelle 113 ausgebildet, eine Vielzahl von Sensordaten von der Vielzahl von Sensoren 120a,b zu erhalten. Die Prozessoreinrichtung 111 der Datenverarbeitungsvorrichtung 110 ist erfindungsgemäß ausgebildet, auf der Grundlage der von der Kommunikationsschnittstelle 113 empfangenen Sensordaten in einer ersten Phase eine Objekterkennung durchzuführen. Hierzu ist gemäß einer Ausführungsform die Prozessoreinrichtung 111 ausgebildet, ein oder mehrere Machine-Learning-Modelle (ML-Modelle), insbesondere künstliche neuronale Netze zur Objekterkennung zu implementieren, welche darauf trainiert sind, anhand der Vielzahl von Sensordaten einen jeweiligen Ladungsträger 140, beispielsweise die in Figur dargestellte Palette 140 sowie die darauf angeordneten Ladungen bzw. Wareneinheiten 160a,b zu erkennen.

Die Datenerfassung durch die Vielzahl von Sensoren 130a,b kann zeitlich und/oder räumlich versetzt erfolgen. Mit anderen Worten: die Sensoren 130a,b können einen jeweiligen Ladungsträger 140 mit den darauf angeordneten Wareneinheiten 160a,b zu unterschiedlichen Zeitpunkten, insbesondere periodisch oder fortlaufend, und/oder aus unterschiedlichen räumlichen Positionen oder Orientierungen relativ zu dem jeweiligen Sensor 130a,b erfassen.

In einer Ausführungsform ist die Prozessoreinrichtung 111 ferner dazu eingerichtet, die, wie vorstehend beschrieben, vorzugsweise mittels künstlichen neuronalen Netzwerken erkannten Ladungsträger 140 und die darauf angeordneten Wareneinheiten 160a,b mit einem Warenmanagementsystem zur genaueren Objektidentifikation abzugleichen, beispielsweise unter Verwendung von Produktlabeln. In einer Ausführungsform kann das System 100 als ein solches Warenmanagementsystem 100 (auch als Warenverwaltungssystem 100 bezeichnet) ausgebildet sein und die erfindungsgemäße Datenverarbeitungsvorrichtung Teil eines solchen Warenmanagementsystems 100 sein.

Neben der Objekterkennung kann die Prozessoreinrichtung 111 der erfindungsgemäßen Datenverarbeitungsvorrichtung 110 dazu ausgebildet sein, anhand der Sensordaten weitere Information der erkannten Objekte, d.h. des Ladungsträgers 140 sowie der darauf angeordneten Wareneinheiten 160a,b, zu bestimmen. Solche Informationen können umfassen: den Typ des Ladungsträgers, z.B. Euro-Palette; die Anzahl der auf dem Ladungsträger 140 angeordneten Wareneinheiten 160a,b; die Abmessungen bzw. Dimensionen der auf dem Ladungsträger 140 angeordneten Wareneinheiten 160a,b, z.B. die Abmessungen der auf dem Ladungsträger 140 angeordneten Wareneinheiten 160a,b; ein Packmuster wie die Wareneinheiten 160a,b auf dem Ladungsträger 140, beispielsweise in mehreren Lagen angeordnet sind; Informationen zu einer kartonbezogenen äußeren Gestaltung der auf dem Ladungsträger 140 angeordneten Wareneinheiten 160a,b; die Materialbeschaffenheit der auf dem Ladungsträger 140 angeordneten Wareneinheiten 160a,b, beispielsweise aus Karton und/oder mir einer Folie verpackt.

In einer Ausführungsform ist die Prozessoreinrichtung 111 der Datenverarbeitungsvorrichtung 110 ausgebildet, die vorstehend beschriebenen Informationen, insbesondere die Abschätzung des Beladungsstatus des Ladungsträgers 140 mit den Wareneinheiten 160a,b zusammen mit einem Konfidenzwert zu bestimmen. Ferner kann die Prozessoreinrichtung 111 der Datenverarbeitungsvorrichtung 110 ausgebildet sein, auf der Grundlage des jeweiligen Konfidenzwertes die vorstehend genannten Informationen auszuwählen und weiterzuverarbeiten. Beispielsweise kann die Prozessoreinrichtung 111 der Datenverarbeitungsvorrichtung 110 ausgebildet sein, nur die Informationen heranzuziehen, welche einen Konfidenzwert aufweisen, der größer als ein Schwellenwert ist, z.B. größer als 0,5. Dies erlaubt beispielsweise einen Gesamtkonfidenzwert durch Kombination von Informationen mit hohen Konfidenzwerten zu erhöhen bzw. Informationen mit geringer Konfidenz nicht zu berücksichtigen.

Im Folgenden wird ein Ausführungsbeispiel der Datenverarbeitungsvorrichtung 110 beschrieben, bei welchem die Vielzahl von Ladungsträgern 140 in Form von Paletten 140 ausgebildet sind. Im Verlauf eines logistischen Prozesses können die Paletten 140 unterschiedliche Beladungszustände aufweisen. Beispielsweise kann bei einem Kommisioniervorgang eine Zielpalette 140 als leere Palette starten und per Pick-and-Place-Vorgängen mit Wareneinheiten (z. B. Kartons) 160a,b beladen werden, bis die Zielpalette 140 voll beladen ist. Entsprechend kann eine Quellpalette 140 als voll beladene Palette 140, d.h. mit einem Beladungsstatus von 100% starten, von der im Laufe der Zeit mittels Pick-and-Place-Vorgängen Wareneinheiten (z. B. Kartons) 160a,b entnommen werden, bis die Quellpalette 140 leer ist und durch eine neue voll beladene Quellpalette 140 ersetzt werden kann.

Wie bereits vorstehend beschrieben, werden mit den Sensoren 130a,b, vorzugsweise in Form von Kameras 130a,b, fortlaufend Sensordaten in Form von Bilddaten erfasst und über die Kommunikationsschnittstelle 113 an die Prozessoreinrichtung 111 der Datenverarbeitungsvorrichtung 110 übermittelt. Gemäß einer Ausführungsform können die Sensoren 130a,b bereits eine Vorverarbeitung der erfassten Rohdaten vornehmen und diese als vorverarbeitete Sensordaten der Datenverarbeitungsvorrichtung zur Verfügung stellen. Somit können mittels der vorzugsweise als Kameras 130a,b ausgebildeten Sensoren 130a,b, welche wie vorstehend bereits beschrieben an einem mobilen Flurförderzeug 120a angebracht oder fest in dem Warenlager installiert sein können oder an Flug-Drohnen als Sensorträger angebracht sein können und/oder von einer Person getragen oder auf einen Rollwagen geschoben werden können, die Veränderungen des Beladungszustands der Quellpalette 140 und/oder der Zielpalette 140 bildgebend erfasst werden. Die Sensoren 130a können an den Flurförderzeugen 120a,b in beliebigen Richtungen montiert sein. Ferner können schwenkbare, vorzugsweise bildgebenden Sensoren 130a,b eingesetzt werden, welche es erlauben, Sensordaten zu erzeugen, welche Informationen aus einem größeren Bereich des Warenlagers mit hoher Auflösung enthalten.

Wie bereits vorstehend beschrieben, ist die Prozessoreinrichtung 111 der erfindungsgemäßen Datenverarbeitungsvorrichtung 110 ausgebildet, anhand der von der Vielzahl von Sensoren 130a,b bereitgestellten Sensordaten den Beladungszustand z.B. der Quellpalette 140 und der Zielpalette 140 als logistisch relevante Information zu bestimmen. Wie bereits ferner vorstehend beschrieben, kann gemäß einer Ausführungsform die Prozessoreinrichtung 111 der Datenverarbeitungsvorrichtung 110 ausgebildet sein, anhand einer Veränderung des Beladungszustands Eigenschaften der auf den Paletten 140 angeordneten Wareneinheiten 160a,b zu bestimmen, beispielsweise durch einen Vergleich zwischen einem Bild einer Palette 140 vor und nach einer Veränderung des Beladungszustands. Beispielsweise kann durch die Entnahme einer Wareneinheit 160a,b in Form eines Kartons 160a,b von einer Quellpalette 140 ggf. der Karton 160a,b selbst erfasst werden, zumindest aber kann die hierdurch entstandene Lücke auf der Quellpalette 140 erkannt werden und hieraus die Kontur und somit die Abmessungen des entnommenen Kartons 160a,b bestimmt werden. Wie bereits vorstehend beschrieben, kann die Prozessoreinrichtung 111 der Datenverarbeitungsvorrichtung 110 hierzu vorzugsweise ausgebildet sein, aus einem Differenzbild vor und nach der Veränderung des Beladungszustands der Palette 140 einen veränderten Bildbereich, welcher dem entnommenen Karton entspricht, zu extrahieren. Mittels mehrerer solcher Differenzbilder, die auf Bilddaten basieren, die zu unterschiedlichen Zeitpunkten und/oder aus unterschiedlichen Positionen und/oder Orientierungen relativ zu der Palette 140 von der Vielzahl von Sensoren 130a,b erfasst werden, kann die Prozessoreinrichtung 111 der Datenverarbeitungsvorrichtung 110 umfangreiche Objekteigenschaften der Wareneinheiten 160a,b, insbesondere Kartons160a,b erfassen, wie dies bereits vorstehend beschrieben worden ist.

In dem oben beschriebenen Beispiel können die Quellpalette 140 und die Zielpalette 140 mittels der Vielzahl von beispielsweise als Kameras ausgebildeten Sensoren 130a,b erfasst werden. Diese Erfassung durch die Sensoren 130a,b kann in zufälliger Weise erfolgen, beispielsweise durch einen an einem vorbeifahrenden Flurförderzeug 120a angebrachten Sensor 130a oder durch eine fest in dem Warenlager installierte Kamera 130b zur Überwachung eines Ganges, wenn die Palette mittels eines Flurförderzeugs 120b transportiert wird. In einer Ausführungsform kann hierbei nur die Außenkontur der Palette 140 sowie des Clusters von Wareneinheiten 160a,b auf der Palette 140 erfasst werden.

Nach der Bereitstellung der Quellpalette 140 an einem Quellpalettenplatz werden Wareneinheiten 160a,b, beispielsweise in Form von Kartons 160a,b von der Quellpalette 140 entnommen und auf der auf einem Flurförderzeug 120a,b befindlichen Zielpalette 140 kommissioniert. Dieser Vorgang kann mittels einem als Kamera ausgebildeten Sensor 130a,b erfasst werden, dessen Blickfeld entlang der Gabelrichtung des Flurförderzeugs 120a,b liegt. Hieraus kann, wie bereits vorstehend beschrieben, die Prozesseinrichtung 111 der Datenverarbeitungsvorrichtung 110 weitere Objekteigenschaften der Wareneinheiten 160a,b wie Größe und optische Erscheinung/Bedruckung bestimmen.

Zusätzlich kann durch Erfassung des Verhaltens eines Pickers, welcher die Wareneinheiten 160a,b von der Quellpalette 140 entnimmt, die Prozesseinrichtung 111, die Handhabbarkeit der Wareneinheiten 160a,b durch den Picker und somit die Dauer des Pickvorgangs bestimmen. Hierbei kann zumindest die Gesamtdauer des Pickvorgangs erfasst bzw. bestimmt werden. Ferner können bei der Erkennung der gepickten Wareneinheiten 160a,b detailreichere Informationen gesammelt werden, die z. B. hinsichtlich von Prozessoptimierungen Verwendung finden können.

Die Quellpalette 140 kann mittels der als Kameras ausgebildeten Sensoren 130a,b erfasst werden, die seitlich an den Flurförderzeugen 120a,b angebracht sind. Hierbei ist wesentlich, dass die Erfassung der Quellpalette nicht zwingend notwendig durch ein Fahrzeug erfolgen muss, sondern auch bei der Vorbeifahrt zufällig erfasst werden kann.

Die Zielpalette 140 kann in analoger Weise durch die als Kameras ausgebildeten Sensoren 130a,b erfasst werden. Diese Kameras 130a,b können: auf dem Flurförderzeug 120a,b angebracht sein, welches die Zielpalette 140 trägt; auf anderen Flurförderzeugen 120a,b verbaut und ausgebildet sein, in deren Blickfeld ebenfalls nebenstehende Flurförderzeuge zu erfassen; und/oder stationär in dem Warenlager montiert sein, beispielsweise zur Überwachung von Gängen in dem Warenlager. Wie bereits vorstehend beschrieben, ist gemäß einer Ausführungsform die Prozessoreinrichtung 111 der Datenverarbeitungsvorrichtung 110 ausgebildet, die Sensordaten aus diesen unterschiedlichen Quellen zu fusionieren, um auf dieser Grundlage den Beladungsstatus einer Palette 140 zu bestimmen.

In einer Ausführungsform kann die Datenverarbeitungsvorrichtung 110 Teil des Warenmanagementsystems 100 sein und beispielsweise das Warenmanagementsystems 100 benachrichtigen, falls der Beladungsstatus einer Quellpalette 140 anzeigt, dass die Quellpalette 140 nahezu leer ist. In Reaktion auf eine solche Benachrichtigung kann das Warenmanagementsystems 100 veranlassen, dass eine neue volle Quellpalette 140 "just in time" angeliefert wird. Ferner kann auf der Grundlage des von der Datenverarbeitungsvorrichtung 110 bestimmten Beladungsstatus ein Abgleich des Warenbestands mit dem im Warenmanagementsystem gespeicherten Warenbestand in Art einer kontinuierlichen Online-Inventur erfolgen. Basierend hierauf kann eine Identifikation von Situationen, Orten und/oder Warentypen erfolgen, bei denen gehäuft Differenzen zwischen Warenbestand laut dem Warenmanagementsystem 100 und dem online durch die Datenverarbeitungsvorrichtung 110 bestimmten Beladungsstatus auftreten. Hierdurch können beispielsweise Warendiebstähle oder Zerstörung von Waren durch unsachgemäßes Handeln zeitnah erkannt und entsprechende Gegenmaßnahmen ergriffen werden.

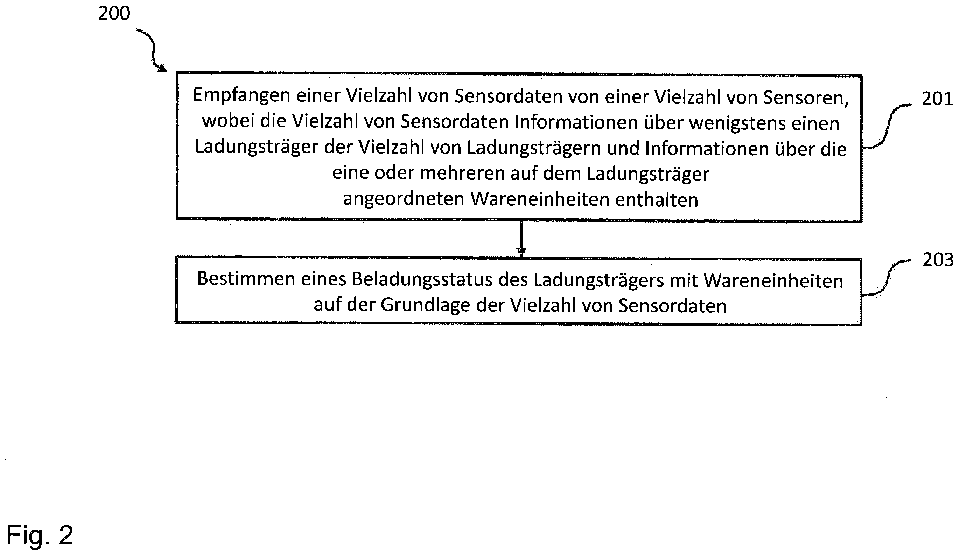

Figur 2 zeigt ein Flussdiagramm mit Schritten eines Verfahrens 200 zum automatisierten Verwalten von Ladungsträgern 140 und Wareneinheiten 160a,b in einem Warenlager. Das Verfahren 200 umfasst einen Schritt 201 des Empfangens einer Vielzahl von Sensordaten von der Vielzahl von Sensoren 130a,b, wobei die Vielzahl von Sensordaten Informationen über wenigstens einen Ladungsträger 160 der Vielzahl von Ladungsträgern 160 und Informationen über eine oder mehrere auf dem Ladungsträger 160 angeordneten Wareneinheiten 160a,b enthalten. Das Verfahren 200 umfasst ferner einen Schritt 203 des Bestimmens eines Beladungsstatus des Ladungsträgers 160 auf der Grundlage der Vielzahl von Sensordaten.

Das erfindungsgemäße Verfahren 200 kann mittels der erfindungsgemäßen Datenverarbeitungsvorrichtung 110 durchgeführt werden. Daher ergeben sich weitere Ausführungsformen des erfindungsgemäßen Verfahrens 200 aus den vorstehend beschriebenen Ausführungsformen der erfindungsgemäßen Datenverarbeitungsvorrichtung 110.

## Patentansprüche

1. Vorrichtung (110) zum automatisierten Verwalten einer Vielzahl von Ladungsträgern (140) und einer Vielzahl von Wareneinheiten (160a,b), wobei auf einem oder mehreren der Vielzahl von Ladungsträgern (140) eine oder mehrere der Vielzahl von Wareneinheiten (160a,b) angeordnet sind, wobei die Vorrichtung (110) umfasst:
eine Kommunikationsschnittstelle (113), welche ausgebildet ist, eine Vielzahl von Sensordaten von einer Vielzahl Sensoren (130a,b) zu empfangen, wobei die Vielzahl von Sensordaten Informationen über wenigstens einen Ladungsträger (160) der Vielzahl von Ladungsträgern (160) und/oder Informationen über die eine oder mehreren auf dem Ladungsträger (160) angeordneten Wareneinheiten (160a,b) enthalten; und
eine Prozessoreinrichtung (111), welche ausgebildet ist, auf der Grundlage der Vielzahl von Sensordaten einen Beladungsstatus des Ladungsträgers (160) zu bestimmen.

2. Vorrichtung (110) nach Anspruch 1, wobei die Vielzahl von Sensordaten eine Vielzahl von Bilddaten umfassen, welche zumindest einen Abschnitt des Ladungsträgers (140) und/oder zumindest einen Abschnitt der einen oder mehreren auf dem Ladungsträger angeordneten Wareneinheiten (160a,b) repräsentieren.

3. Vorrichtung (110) nach Anspruch 1 oder 2, wobei die Vielzahl von Sensordaten unterschiedliche Sensordatentypen umfassen und wobei die Prozessoreinrichtung (111) ausgebildet ist, die unterschiedlichen Sensordatentypen zu fusionieren, um auf der Grundlage der Vielzahl von fusionierten Sensordaten den Beladungsstatus des Ladungsträgers (140) zu bestimmen.

4. Vorrichtung (110) nach einem der vorhergehenden Ansprüche, wobei die Prozessoreinrichtung (111) ausgebildet ist, ein Machine-Learning-Modell, ML-Modell, insbesondere ein künstliches neuronales Netz zur Objekterkennung zu implementieren, wobei das ML-Modell ausgebildet ist, auf der Grundlage der Vielzahl von Sensordaten den Ladungsträger (140) und die darauf angeordnete eine oder mehreren Wareneinheiten (160a,b) zu erkennen und auf der Grundlage des erkannten Ladungsträgers (140) und der einen oder mehreren erkannten Wareneinheiten (160a,b) den Beladungsstatus des Ladungsträgers (140) zu bestimmen.

5. Vorrichtung (110) nach einem der vorhergehenden Ansprüche, wobei die Prozessoreinrichtung (111) ausgebildet ist, auf der Grundlage der Vielzahl von Sensordaten eine Anzahl der auf dem Ladungsträger (140) angeordneten einen oder mehreren Wareneinheiten (160a,b) zu bestimmen, um den Beladungsstatus des Ladungsträgers (140) zu bestimmen.

6. Vorrichtung (110) nach einem der vorhergehenden Ansprüche, wobei die Prozessoreinrichtung (111) ausgebildet ist, auf der Grundlage der Vielzahl von Sensordaten Eigenschaften der auf dem Ladungsträger angeordneten einen oder mehreren Wareneinheiten (160a,b) zu bestimmen.

7. Vorrichtung (110) nach einem der vorhergehenden Ansprüche, wobei die Kommunikationsschnittelle ausgebildet ist, Informationen über den Beladungsstatus des Ladungsträgers an ein Warenverwaltungssystem zu übermitteln.

8. Warenverwaltungssystem (100) zum automatisierten Verwalten einer Vielzahl von Ladungsträgern (140) mit darauf angeordneten Wareneinheiten (160a,b), wobei das Warenverwaltungssystem (100) eine Vielzahl von Flurförderzeugen und/oder Transportrobotern (120a,b) zum Transport der Ladungsträger (140) und/oder der Wareneinheiten (160a,b) und eine Vorrichtung (110) gemäß einem der vorhergehenden Ansprüchen umfasst.

9. Warenverwaltungssystem (100) nach Anspruch 8, wobei die Prozessoreinrichtung (111) ausgebildet ist, auf der Grundlage des Beladungsstatus des Ladungsträgers (140) eine Vielzahl von Steuersignalen zum Steuern der Vielzahl von Flurförderzeugen und/oder Transportrobotern (120a,b) zu generieren, und wobei die Kommunikationsschnittstelle (113) ausgebildet ist, die Vielzahl von Steuersignalen an die Vielzahl von Flurförderzeugen und/oder Transportrobotern (120a,b) zu übermitteln.

10. Verfahren (200) zum automatisierten Verwalten einer Vielzahl von Ladungsträgern (140) und einer Vielzahl von Wareneinheiten (160a,b), wobei auf einem oder mehreren der Vielzahl von Ladungsträgern (140) eine oder mehrere der Vielzahl von Wareneinheiten (160a,b) angeordnet sind, wobei das Verfahren (200) umfasst:
Empfangen (201) einer Vielzahl von Sensordaten von einer Vielzahl von Sensoren (130a,b), wobei die Vielzahl von Sensordaten Informationen über wenigstens einen Ladungsträger (160) der Vielzahl von Ladungsträgern (160) und/oder Informationen über die eine oder mehreren auf dem Ladungsträger (160) angeordneten Wareneinheiten (160a,b) enthalten; und
Bestimmen (203) eines Beladungsstatus des Ladungsträgers (160) auf der Grundlage der Vielzahl von Sensordaten.
